(19) Europäisches Patentamt

European Patent Office

Office européen des brevets

(11) Veröffentlichungsnummer: **0 241 824 B1**

(12) **EUROPÄISCHE PATENTSCHRIFT**

(45) Veröffentlichungstag der Patentschrift: **17.06.92**

(21) Anmeldenummer: **87104998.7**

(22) Anmeldetag: **03.04.87**

(51) Int. Cl.⁵: **B65G 1/137**, B65G 1/04

(54) **Warenumschlagsanlage und Verfahren zu deren Betrieb.**

(30) Priorität: **16.04.86 CH 1519/86**

(43) Veröffentlichungstag der Anmeldung:
**21.10.87 Patentblatt 87/43**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**EP-A- 0 235 488**
**AT-B- 310 088**
**DE-B- 2 241 213**

(73) Patentinhaber: **Digitron AG**
**Erlenstrasse 32**
**CH-2555 Brügg(CH)**

(72) Erfinder: **Krieg, Walter**
**Orpundstrasse 30A**
**CH-2555 Brügg(CH)**

(74) Vertreter: **Blum, Rudolf Emil Ernst**
**c/o E. Blum & Co Patentanwälte Vorderberg
11**
**CH-8044 Zürich(CH)**

## Beschreibung

Die Erfindung betrifft eine Warenumschlagsanlage für ein Regallager mit Lagerbehältern, die aus den Regalen entnehmbar sind, wobei für den Transport von Lagerbehältern zwischen dem Regallager und einer Warenentnahmestelle mindestens ein Regalförderzeug vorgesehen ist sowie ein Verfahren zu deren Betrieb. Anlagen dieser Art werden in der Praxis bereits eingesetzt, z.B. zur Kommissionierung, d.h. zur Bereitstellung von Artikeln gemäss Kundenbestellung aus dem Warenlager für die spätere Auslieferung oder zur Beschickung der Produktion etc.

Bei einer herkömmlichen, solchen Anlage wird, wie z.B. in der DE-B2-22 41 213 Beschrieben mittels einem Regalforderzeug jeweils ein Lagerbehälter nach dem anderen gemäss der Bestellung aus dem Lager zu einer Warenentnahmestelle geholt, wo der jeweilige Artikel entnommen und der Lagerbehälter anschliessend wiederum am gleichen Ort versorgt wird.

Selbstverständlich können auch ganze Behälter ausgelagert werden, welche das System verlassen.

Solche Lagersysteme, auch Kleinteilelager genannt, weisen durch die relativ langen Wege vom Lagerort bis an die Entnahmestelle eine beschränkte Umschlagskapazität auf. In der EP-A-0 235 488 ist ferner eine Anlage beschrieben, bei welcher der Kommissionierungsvorgang in Bestellungsbehälter auf dem Regalförderzeug selbst erfolgt. Während der hierfür benötigten zeit ist das Regalförderzeug jedoch in seinen Funktionen beschränkt.

Durch den allgemeinen Trend in den logistischen Warenketten der produzierenden und der warenverteilenden Industrie, die Lagerbestände zu reduzieren und die Versorgung sehr kurzfristig und zeitgerecht durchzuführen, werden Lagersysteme mit hoher Umschlagsleistung und relativ niedrigen Lagervolumen verlangt.

Hohe Umschlagsleistung bedeutet nach dem jetzigen Stand der Technik hohe Investitionen, da entsprechend mehr Regalförderzeuge (RFZ) eingesetzt werden müssen.

Es stellt sich damit die Aufgabe, ein Lagersystem der eingangs genannten Art zu schaffen, bei welchem dieser Nachteil vermieden wird, d.h. mit einer möglichst geringen Anzahl von Regalförderzeugen ein möglichst grosser Warenumschlag erzielt wird.

Diese Aufgabe wird durch die in Anspruch 1 definierte Warenumschlagsanlage gelöst. Damit gelingt es, in einem einzigen Transportumlauf des Regalförderzeuges eine Mehrzahl von Lagerbehältern ein- und auszulagern und damit beispielsweise eine wesentlich höhere Anzahl von verschiedenen Artikeln gemäss Kundenbestellung zur Entnahmestelle zu führen, um dort die jeweilige Kundenbestellung aus den mittels Transportgestell zugeführten Lagerbehältern zusammenzustellen. Währenddem aus dem Transportgestell die einzelnen Artikel der Bestellung entnommen werden, können bei einem weiteren Transportgestell bereits die Lagerbehälter gemäss einer nächsten Bestellung ausgewechselt werden.

Das beanspruchte Verfahren zum Betrieb der Vorrichtung sieht vor, dass im Transportgestell jeweils mindestens ein freier Platz für einen Lagerbehälter offen gehalten wird, wobei ein neu aufzunehmender Lagerbehälter aus dem Regallager jeweils an diesem Platz untergebracht wird, wonach an dem dadurch im Regallager frei werdenden Platz ein abzugebender Lagerbehälter untergebracht und dieser Vorgang solange wiederholt wird, bis die Neubeschickung des Transportgestells abgeschlossen ist. Damit gelingt es, die Transportwege des Regalförderzeugs und damit die Beschickungszeit weiter herabzusetzen.

Nachfolgend wird ein Ausführungsbeispiel der Erfindung anhand der beiliegenden Figuren näher beschrieben. Dabei wird beispielshalber von einer Papierkommissionieranlage ausgegangen, wobei aus einem Papierlager mit z.B. etwa 6000 unterschiedlichen Papierqualitäten bzw. -grössen Kundenbestellungen zusammengestellt werden. In den Zeichnungen zeigen

Fig. 1 ein erfindungsgemäss ausgerüstetes Regalförderzeug mit dem Transportgestell und eingesetzten Lagerbehältern;

Fig. 2 eine detaillierte Ansicht des Tragkorbs des Regalförderzeugs nach Fig. 1;

Fig. 3 eine schematische Darstellung des Ablaufs an der Warenentnahmestelle;

Fig. 4 a. und b. eine schematische Darstellung eines Beschickungsvorgangs;

Fig. 5 eine Handentnahmestation bei der Warenentnahmestelle;

Fig. 6 eine autoamtische Entnahmestation bei der Warenentnahmestelle; und

Fig. 7 eine perspektivische Darstellung eines Lagerbehälters mit verstellbarer Unterteilung;

Fig. 8 a. bis e. eine Aufsicht auf die Beschickungseinrichtung in verschiedenen Phasen, und

Fig. 9 a. bis c. eine Seitenansicht der Beschickungseinrichtung in verschiedenen Phasen.

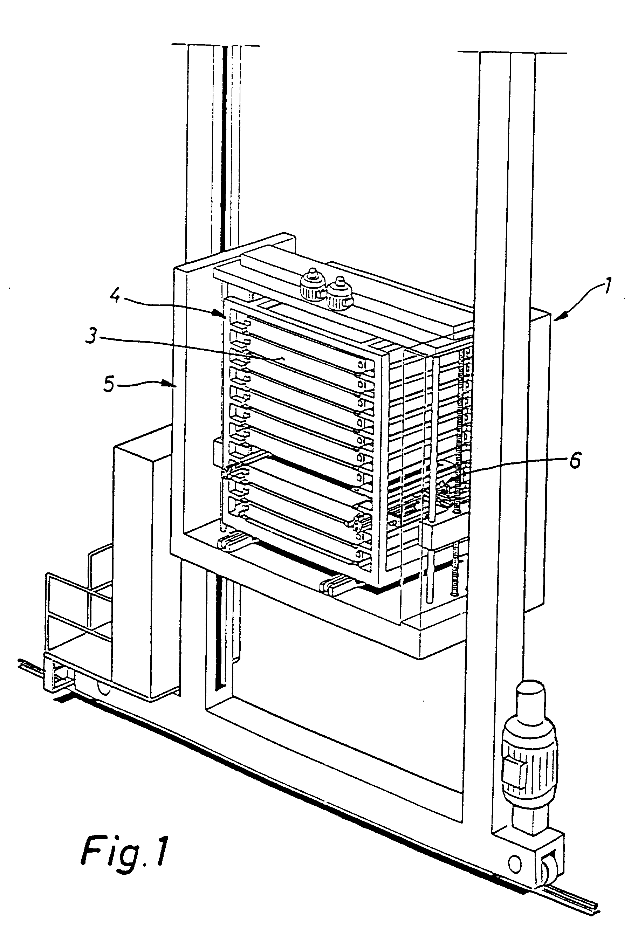

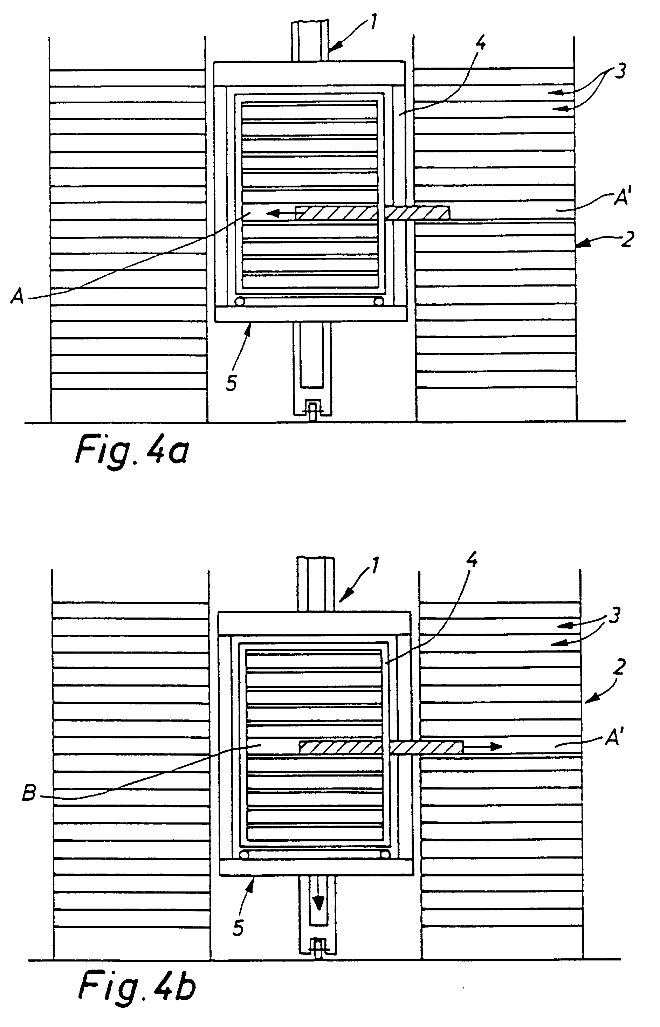

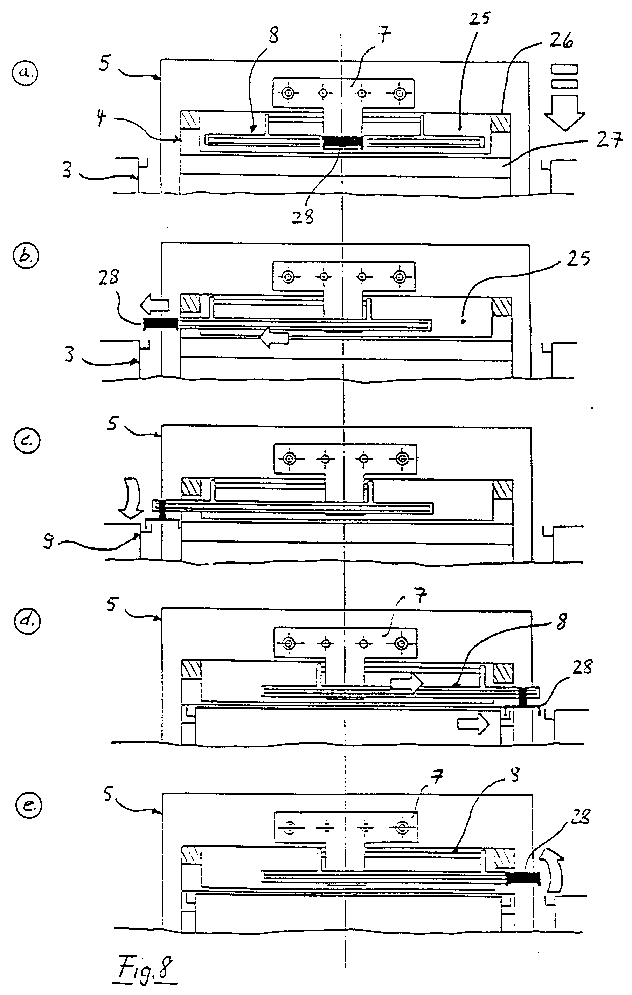

In Fig. 1 ist ein Regalförderzeug 1 gezeigt, das sich schienengebunden im Gang eines Hochregallagers bewegt. Das in dieser Figur nicht gezeigte Hochregallager besteht aus Lagergestellen 2, die sich beidseitig entlang des genannten Gangs erstrecken und Regale aufweisen, in welche Lagerbehälter 3 einschiebbar sind (vgl. Fig. 4 a und b sowie Fig. 7). Dieselben Lagerbehälter sind in entsprechender Weise in ein Transportgestell 4 einschiebbar, welches im Tragkorb 5 des Regalförderzeugs 1 herausnehmbar gehalten ist.

Das Transportgestell 4 ist während des Be-Schickungsvorgangs funktionell ein Teil des Regalförderzeugs, indem die Lagerbehälter 3 mittels einer Beschickungseinrichtung 6 direkt aus den Regalen der Lagergestelle ins Transportgestell 4 verschiebbar und darin transportierbar sind.

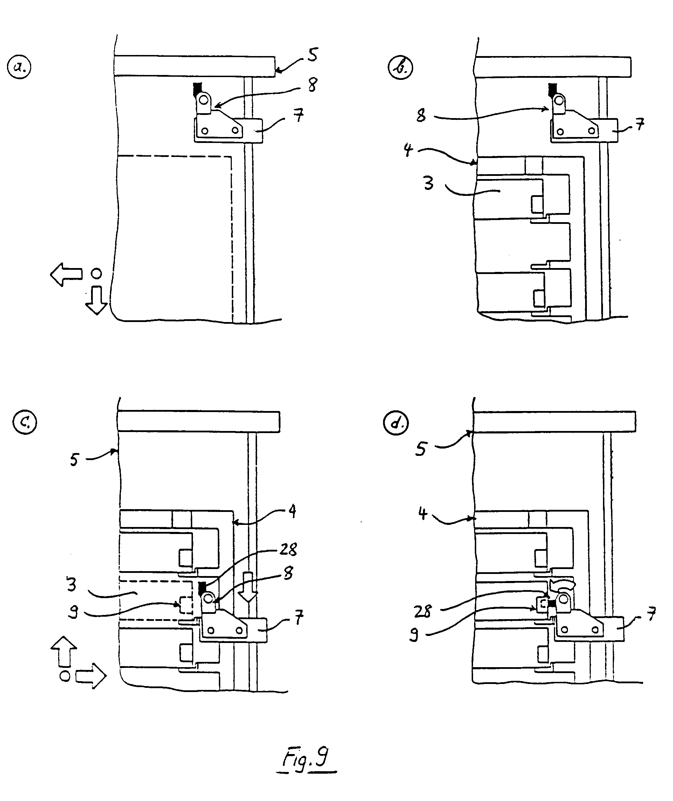

Die Beschickungseinrichtung 6, wie sie insbesondere aus Fig. 8 entnehmbar ist, besitzt beidseitig je ein teleskopartig ausfahrbares Greiforgan 8, welches in entsprechende Vorsprünge 9 am Lagerbehälter 3 eingreifen kann, um diesen aus dem Transportgestell 4 in ein Lagerregal und umgekehrt zu verschieben. Die Greiforgane 8 sind an vertikal auf den jeweiligen Lagerbehälter 3 positionierbaren Schlitten 7 angeordnet und bei deren Vertikalverschiebung sowie für die Entnahme des Transportgestells 4 aus dem Tragkorb 5 nach aussen zurückziehbar. Das Transportgestell 4 besteht aus einem Rahmen, der gegen die Lagergestelle 2 hin beidseitig offen ist und eine Anzahl übereinander angeordneter Fächer besitzt, in welche die Lagerbehälter 3 einschiebbar sind. Gegen die Greiforgane 8 der Beschickungseinrichtung hin ist der Rahmen mit Oeffnungen 10 versehen, durch welche hindurch die Greiforgane 8 in das jeweilige Fach greifen können. Das Transportgestell 4 steht im Tragkorb 5 auf einer Fördervorrichtung, mittels welcher es aus dem Regalförderzeug entnommen werden kann. Hierbei sind zwei Varianten vorgesehen, wobei in den Figuren nur die eine dargestellt ist. Bei dieser Variante ist auf dem Boden des Tragkorbs 5 ein Kettenförderer 11 angeordnet, der bei der Entnahme des Transportgestells 4 mit einem entsprechenden Kettenförderer an einer Entnahmerampe zusammenwirkt. Mittels dem Kettenförderer 11 wird das Transportgestell 4 aus dem Regalförderzeug hinaus und auf den benachbarten Kettenförderer geschoben.

Bei der zweiten, nicht zeichnerisch dargestellten Variante ist zum selben Zweck eine im Tragkorb angeordnete an sich bekannte Teleskopgabelanordnung vorgesehen. Das Transportgestell kann in diesem Fall an seiner Unterseite nach den Massen einer Europalette ausgebildet sein. Mittels der Teleskopgabel kann so das Transportgestell direkt auf eine Entnahmerampe geschoben werden. Bei dieser Variante weist ferner ein Teil des Hochregallagers einen Bereich zur Aufnahme von Transportgestellen auf, in welche diese direkt vom Regalförderzeug einschiebbar sind. In diesem Fall kann das Regalförderzeug einerseits Transportbehälter von den Lagergestellen oder von gelagerten Transportgestellen ins jeweils transportierte Transportgestell verschieben und anderseits auch das Transportgestell selbst in den genannten Bereich schieben. Schliesslich können damit auch Europaletten transportiert und im genannten Lagerbereich untergebracht werden, so dass die Anlage eine weiter erhöhte Variabilität erhält. Dies ist insbesondere von Vorteil beim Nachfüllen von leeren Lagerbehältern, indem mindestens von den gängigsten Artikeln im genannten Lagerbereich ein Vorrat angelegt werden kann.

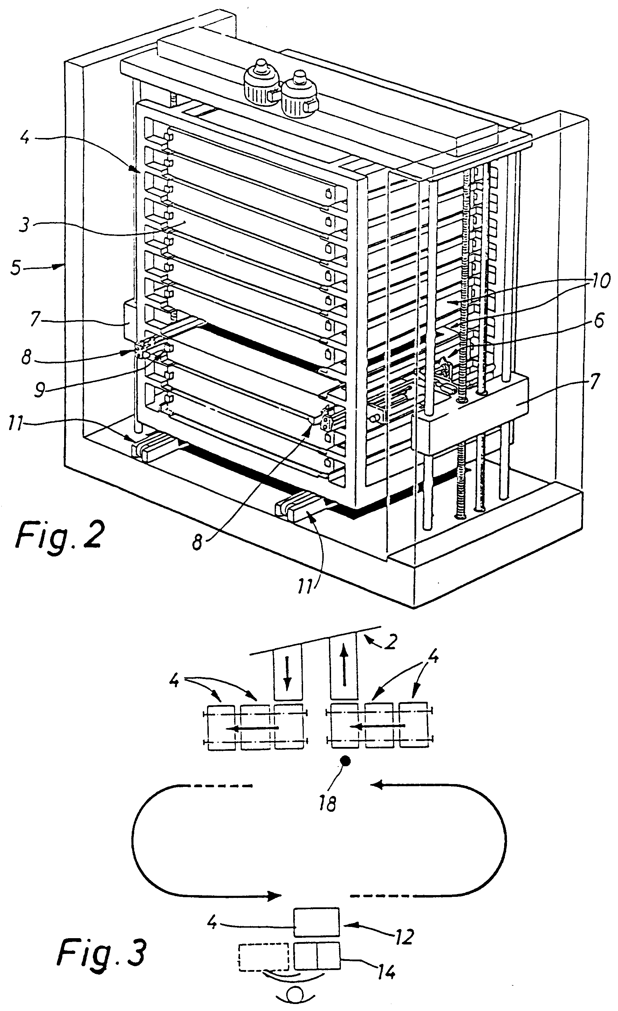

Anhand der Fig. 3 bis 7 soll nun der Kommissioniervorgang für den Fall der Papierkommissionierung erläutert werden. Für andere Waren erfolgt dieser Vorgang in entsprechender Weise.

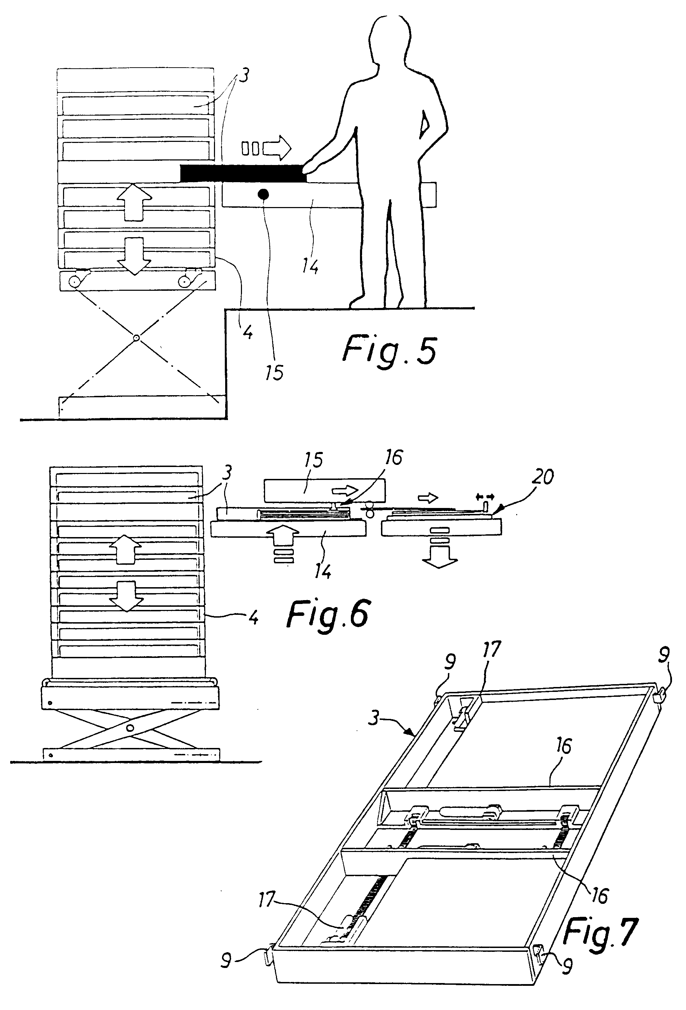

In Fig. 3 ist zunächst schematisch die Warenentnehmestelle ausserhalb des Regallagers 2 gezeigt. Aus dem Regallager werden nacheinander jeweils gemäss Kundenbestellung beschickte Transportgestelle 4 durch das Regalförderzeug angeliefert. Das jeweils benötigte Transportgestell 4 mit den entsprechend gewählten Lagerbehältern wird einer manuellen (Fig. 5) oder mechanischen (Fig. 6) Entnahmestation 12 zugeführt. Dort wird ein Lagerbehälter 3 nach dem andern aus dem Transportgestell 4 auf einen Arbeitstisch 14 gezogen, worauf ihm manuell (Fig. 5) oder mechanisch (Fig. 6) die betreffende Anzahl Artikel gemäss Bestellung entnommen wird. Insbesondere bei der manuellen Variante kann ein Strichcodeleser 15 (schematisch) vorgesehen sein, der mit einem auf den Lagerbehältern 3 angeordneten Strichcode zusammenwirkt und beim Wiedereinschieben der entnommenen Lagerbehälter 3 ins Transportgestell deren Position kontrolliert, um Vertauschungen zu vermeiden. Die mechanische Entnahmevorrichtung gemäss Fig. 6 ist speziell auf die Entnahme von Papierbogen hin ausgelegt und besitzt einen Anleger 15 mit einem Sauggreifer 16, mittels welchem die einzelnen Bogen aus dem Lagerbehälter 3 entnommen und auf ein Transportblech 20 abgelegt werden. Ein für die Lagerung von solchen Papierbogen vorgesehener Lagerbehälter 3 ist in Fig. 7 gezeigt. Er besitzt verstellbare Zwischenwände 16 sowie Anschläge 17, mittels welchen das jeweilige Bogenformat eingestellt werden kann. Bei kleineren Formaten können damit zwei Papierstapel unterschiedlicher oder gleicher Art in einem Behälter 3 untergebracht werden, was die Lagerkapazität erhöht.

Nach der Entnahme wird das jeweilige Transportgestell 4 (Fig. 3) wieder vom Regalförderzeug aufgenommen. Dabei wird mittels einem Strichcodeleser 18 (schematisch) das Transportgestell identifiziert, was eine Voraussetzung für den korrekten Beschickungsvorgang bildet.

Dieser Vorgang ist schematisch in den Fig. 4a und b dargestellt. Im voll beladenen Zustand weist das Transportgestell 4 dabei jeweils ein freies Fach A. auf. Bei einem Beschickungsschritt wird zunächst ein neuer Lagerbehälter in dieses freie Fach 4 übernommen (Fig. 4a), wodurch im Regallager 2 eine Leerstelle A' entsteht. In einem zweiten Schritt wird dann ein alter Lagerbehälter 3 aus einem Fach B in diese Leerstelle A' eingeschoben, nachdem das Regalförderzeug eine entsprechende Vertikalverschiebung vorgenommen hat. In das somit freigewordene Fach B wird hernach wiederum ein anderer neuer Lagerbehälter 3 aufgenommen etc. Vorzugsweise erfolgt der Vorgang so, dass die Fächer A und B im Transportgestell 4 benachbart sind, womit die Vertikalverschiebung des Regalförderzeugs mit entsprechender Zeitersparnis klein bleibt. Wird nur ein- oder ausgelagert, so können alle Plätze im Lagergestell genutzt werden.

Die Funktionsweise der Beschickungseinrichtung für die Lagerbehälter 3 ist insbesondere den Figuren 8 und 9 zu entnehmen. In Fig. 8 ist in Aufsicht die eine Seitenpartie des Tragkorbes 5 mit darin befindlichem Transportgestell 4 sowie die Beschickungseinrichtung in fünf Arbeitsphasen a. bis e. dargestellt. Der vertikal positionierbare Schlitten 7 der Beschickungseinrichtung trägt das teleskopartig gegen die Regallager verschiebbare Greiforgan 8, welches einen Greifer 28 besitzt, der am Greiforgan kippbar angeordnet ist. Das Transportgestell 4 ist seitlich derart ausgestaltet, dass die Einschubleisten 27 für die Lagerbehälter 3 seitlich gegen die Vertikalstreben 26 nach innen versetzt sind, so dass ein Kanal 25 gebildet wird, aus welchem der Greifer 28 innen an den Vertikalstreben 26 des Transportgestells die Lagerbehälter erfassen kann.

Die Abläufe in Fig. 8 und 9 zeigen die Aufnahme eines Lagerbehälters 3 aus dem Regallager in ein Transportgestell 4.

In Fig. 8 sind der Reihe nach folgende Phasen dargestellt: (a) Positionierung der Beschickungseinrichtung auf das betreffende Fach im Regallager; (b) Ausfahren der Greifer 28 gegen das Fach; (c) Verschwenken der Greifer zum Erfassen des Lagerbehälters an Vorsprüngen 9, die an dessen Ecken angeordnet sind; (d) Einziehen des Lagerbehälters in das Transportgestell; (e) Aufklappen der Greifer.

Wie man aus den Figuren entnehmen kann, bleibt die Beschickungseinrichtung während dieses Vorgangs im wesentlichen im Bereich des Transportgestells, was deshalb möglich ist, weil die Greifer 28 an im Bezug auf das Regallager vorderen Ecken der Lagerbehälter angreifen.

In Fig. 9 schliesslich sind der Reihe nach folgende Phasen ersichtlich: (a + b) Einsetzen des Transportgestells 4 in den Tragkorb 5; (c) Positionieren der Beschickungseinrichtung und des Transportgestells derart, dass das leere Fach im Transportgestell 4, das Regalfach mit dem Lagerbehälter 3 und die Beschickungseinrichtung in einer Ebene liegen; (d) Uebernahme des Lagerbehälters 3 ins Transportgestell 4 nach Verschwenken des Greifers 28. Die erwähnte Positionierung umfasst mehrere gleichzeitig ablaufende Vorgänge, indem einerseits der Tragkorb 5 und anderseits die Beschickungseinrichtung am Tragkorb in die gewünschte Lage gebracht wird und zudem das Greiforgan 8 mindestens teilweise ausgefahren werden kann.

Auf diese Weise gelingt es, ein Transportgestell 4 in relativ kurzer Zeit gemäss einer Kundenbestellung neu zu beschicken. Lagerbehälter 3, die bereits bei der vorangehenden Bestellung ins Transportgestell aufgenommen wurden, brauchen dabei natürlich nicht ausgetauscht zu werden. Soll die Leistungsfähigkeit der Anlage weiter erhöht werden, so können mehrere, unabhängig voneinander arbeitende Beschickungseinrichtungen der genannten Art am Tragkorb 5 angeordnet sein.

Die ganze Anlage ist in an sich bekannter Weise von einem Rechner gesteuert, wobei der Standort jedes mit Strichcode oder einer anderen Identifizierung versehenen Lagerbehälters 3 jederzeit bekannt bleibt und abrufbar ist.

Dabei kann bei der mechanischen Entnahme (Fig. 6) auch der Kommissioniervorgang selbst vom Rechner gesteuert werden. Der Anleger 15 entnimmt dabei die vom Rechner vorgegebene Anzahl Bogen und legt diese auf das Transportblech 20 ab, nachdem der entsprechende Lagerbehälter mit einer Auszugsvorrichtung aus dem Transportgestell herausgezogen worden ist. Nach der Bogenentnahme wird der Lagerbehälter wieder in sein Fach zurückgeschoben und das Transportgestell 4 wird um eine Facheinteilung verschoben zur Entnahme des nächsten Lagerbehälters etc.

Die beschriebene Kommissionieranlage ist selbstverständlich auch für andere Warenarten als Papierbogen geeignet, um aus einer Vielzahl unterschiedlicher Einzelartikel in einem Warenlager relativ artikelreiche Kundenbestellungen rationell zusammenzustellen.

**Patentansprüche**

1. Warenumschlagsanlage für ein Regallager (2) mit Lagerbehältern (3), die aus den Regalen entnehmbar sind, wobei für den Transport von Lagerbehältern zwischen dem Regallager und einer Warenentnahmestelle mindestens ein Regalförderzeug (1) vorgesehen ist, dadurch gekennzeichnet, dass das Regalförderzeug (1) zur Aufnahme eines Transportgestells (4) für eine Mehrzahl von Lagerbehältern (3) ausgestaltet ist und eine Beschickungseinrichtung zur Ueberführung der Lagerbehälter zwischen dem Regallager (2) und dem Transportgestell (4) aufweist, wobei das Transportgestell mit den darin Befindlichen Lagerbehältern mindestens im Bereich der Warenentnahmestelle aus dem Regalförderzeug (1) entnehmbar bzw. in dieses einsetzbar ist, derart dass die Kommissionierung aus dem entnommenen Transportgestell an der Warenentnahmestelle erfolgt.

2. Warenumschlagsanlage nach Anspruch 1, dadurch gekennzeichnet, dass das Transportgestell (4) mit einer Mehrzahl von Fächern für den Einschub von Lagerbehältern (3) versehen ist, welche mindestens gegen die Regale des Regallagers hin offen sind, derart, dass ein Lagerbehälter von einem Fach direkt in ein Regal und umgekehrt schiebbar ist.

3. Warenumschlagsanlage nach Anspruch 2, dass eine Beschickungseinrichtung (6) an den nicht dem Regallager zugewandten Seiten des Regalförderzeugs (1) angeordnet und mit Greiforganen (8) versehen ist, die in ein gewähltes Fach des Transportgestells einführbar sind, um den entsprechenden Lagerbehälter (3) zu erfassen, wobei die Greiforgane (8) in Richtung des Regallagers ausfahrbar sind.

4. Warenumschlagsanlage nach Anspruch 3, dadurch gekennzeichnet, dass das Transportgestell (4) an seinen dem Regallager nicht zugewandten Seiten horizontale Streben bzw. Einschubleisten (27) für die Lagerbehälter besitzt, welche gegenüber den Vertikalstreben (26) des Transportgestells derart nach innen versetzt wird, dass ein seitlicher, vertikal verlaufender Kanal (25) entsteht, in welchem die Greiforgane (8) vertikal auf die Höhe des jeweils zu erfassenden Behälters positionierbar sind.

5. Warenumschlagsanlage nach Anspruch 4, dadurch gekennzeichnet, dass die Greifvorrichtung unter Erfassung eines Lagerbehälters teleskopisch aus dem Kanal (25) gegen das Regallager hin ausfahrbar ist.

6. Warenumschlagsanlage nach einem der Ansprüche 3 bis 5, dadurch gekennzeichnet, dass die Greiforgane je einen Greifer (28) zum Erfassen der Lagerbehälter in deren Eckbereichen besitzen, wobei die Greifer an den im Bezug auf das Regallager vorderen Eckbereichen jedes Lagerbehälters angreifen und wobei die Greifer im wesentlichen über die Breite des Transportgestells verschiebbar angeordnet sind.

7. Warenumschlagsanlage nach einem der vorangehenden Ansprüche, dadurch gekennzeichnet, dass die Anzahl der Plätze im Transportgestell (4) die Anzahl der darin zu transportierenden Behälter (3) um mindestens eines übersteigt.

8. Warenumschlagsanlage nach einem der vorangehenden Ansprüche, dadurch gekennzeichnet, dass das Transportgestell mittels einem Kettenförderer (11) aus dem Regelförderzeug entnehmbar bzw. in dieses einsetzbar ist.

9. Warenumschlagsanlage nach einem der Ansprüche 1 bis 7, dadurch gekennzeichnet, dass das Regalförderzeug eine in Richtung des Lagerregals ausfahrbare Teleskopgabelanordnung besitzt, mittels welcher das Transportgestell aus dem Regalförderzeug abgebbar bzw. in dieses aufnehmbar ist.

10. Warenumschlagsanlage nach Anspruch 9 für ein Regallager mit einem Lagerbereich zur Aufnahme von Transportgestellen, dadurch gekennzeichnet, dass mittels der Teleskopgabelanordnung jeweils ein Transportgestell zwischen dem genannten Lagerbereich und dem Regalförderzeug überführbar ist.

11. Warenumschlagsanlage nach einem der vorangehenden Ansprüche, dadurch gekennzeichnet, dass im Bereich der Warenentnahmestelle eine Anordnung zur Entnahme von Transportgestellen aus dem Regalförderzeug, zur Zuführung der entnommenen Transportgestelle an eine Entnahmestation und zum Wiedereinsetzen der Transportgestelle ins Regalförderzeug vorgesehen ist, wobei während dem Wahrenentnahmevorgang mittels dem Regalförderzeug ein anderes Transportgestell mit Lagerbehältern beschickbar ist.

12. Warenumschlagsanlage nach Anspruch 9, dadurch gekennzeichnet, dass an der Entnahmestation jeweils ein Lagerbehälter nach dem andern zur Warenentnahme aus dem Transportgestell entnehmbar ist.

13. Verfahren zum Betrieb der Anlage nach einem der vorangehenden Ansprüche, dadurch gekennzeichnet, dass im Transportgestell jeweils mindestens ein freier Platz für einen Lagerbehälter offen gehalten wird, wobei ein neu aufzunehmender Lagerbehälter aus dem Regallager jeweils an diesem Platz untergebracht wird, wonach an dem dadurch im Regallager freiwerdenden Platz ein abzugebender Lagerbehälter untergebracht und dieser Vorgang solange wiederholt wird, bis die Neubeschickung des Transportgestells abgeschlossen ist.

## Claims

1. A goods handling facility for a storage rack (2) with storage bins (3) which are retrievable from the shelves of said rack, wherein for conveying storage bins between said storage rack and a goods removing station at least one rack conveyer unit (1) is provided, characterized in that said rack conveyer unit (1) is arranged to receive a transport frame (4) for a plurality of storage bins (3) and comprises a charging device operative to transfer said storage bins between said storage rack (2) and said transport frame (4), which transport frame together with the storage bins contained therein is removable from said rack conveyer unit (1) and reinsertable therein, respectively, at least near said goods removing station, so that the collection of lots from said removed transport frame is performed at said goods removing station.

2. The goods handling facility of claim 1, characterized in that said transport frame (4) comprises a plurality of compartments for inserting storage bins (3), which compartments are open at least towards the shelves of said storage rack, so that a storage bin is transferable directly from one of the compartments into one of the shelves and vice versa.

3. The goods handling facility of claim 2, characterized in that a charging device (6) is arranged at the sides of the rack conveyer unit (1) which are not facing said storage rack and comprises gripping members (8) which are insertable into one selected compartment of said transport frame in order to grip a respective storage bin (3), wherein the gripping members (8) are extendable towards said storage rack.

4. The goods handling facility of claim 3, characterized in that said transport frame (4) comprises horizontal struts or insertion ledges (27), respectively, for said storage bins at its sides not facing said storage rack, which are inwardly displaced relative to vertical struts (26) of the transport frame, such that a lateral, vertically extending channel (25) is formed, within which said gripping members (8) are positionable vertically to the height of a respective storage bin to be gripped.

5. The goods handling facility of claim 4, characterized in that the gripping device while gripping a storage bin is telescopically extendable out of said channel (25) towards said storage rack.

6. The goods handling facility of one of the claims 3 to 5, characterized in that each gripping member includes a gripper (28) operative to grip the storage bins at their corner areas, wherein the grippers are arranged to engage the corner areas at the front end of each storage bin relative to said storage rack and wherein the grippers are arranged to be displaceable substantially over the width of the transport frame.

7. The goods handling facility of one of the preceding claims, characterized in that the number of places in said transport frame (4) exceeds the number of storage bins (3) to be transported therein by at least one.

8. The goods handling facility of one of the preceding claims, characterized in that the transport frame is removable from and insertable into, respectively, said rack conveyer unit by means of a chain conveyer (11).

9. The goods handling facility of one of the claims 1 to 7, characterized in that said rack conveyer unit comprises a telescoping fork member extendable towards the storage rack, by means of which the transport frame is removable from and insertable into said rack conveyer unit.

10. The goods handling facility of claim 9 for a storage rack having a storage area for the receipt of transport frames, characterized in that by means of the telescoping fork member a transport frame is transferable between said storage area and said rack conveyer unit.

11. The goods handling facility of one of the preceding claims, characterized in that in the area of the goods removing station there is a device for retrieving transport frames from the rack conveyer unit, for conveying retrieved transport frames to said goods removing station and for reinserting said transport frames into said rack conveyer unit, wherein during the process of removing goods another transport frame is chargeable with storage bins by means of said rack conveyer unit.

12. The goods handling facility of claim 9 characterized in that at the goods removing station one storage bin after the other is removable from the transport frame for removing goods therefrom.

13. A method of operating the goods handling facility as set forth in one of the preceding claims, characterized in that in the transport frame at least one place is kept free for a storage bin to allow a newly received storage bin from the storage rack to be stored at said place, whereafter a storage bin to be deposited is transferred to the respective free place in the storage rack, which procedure is repeated until the new charging of said transport frame is completed.

## Revendications

1. Installation de transfert de produits pour un magasin à rayonnages (2) avec des récipients de stockage (3) qui peuvent être enlevés des rayonnages, au moins un transstockeur pour magasin à hauts rayonnages (1) étant prévu pour le transport de récipients de stockage entre le magasin à rayonnages et un lieu de prélèvement de produits, caractérisée en ce que le transstockeur pour magasin à hauts rayonnages (1) est réalisé pour recevoir un châssis de transport (4) pour une pluralité de récipients de stockage (3) et présente un dispositif de chargement pour le transport des récipients de stockage entre le magasin à rayonnages (2) et le châssis de transport (4), le châssis de transport avec les récipients de stockage se trouvant dedans pouvant être enlevé du transtockeur pour magasin à hauts rayonnages (1) ou respectivement être mis dedans, au moins dans la région du lieu de prélèvement de produits, de telle manière que la préparation des commandes se produise hors du châssis de transport enlevé au lieu de prélèvement de produits.

2. Installation de transfert de produits selon la revendication 1, caractérisée en ce que le châssis de transport (4) est muni d'une pluralité de cases pour l'introduction en glissant de récipients de stockage (3), lesquelles sont ouvertes au moins dans la direction contre les rayonnages du magasin à rayonnages, de telle manière qu'un récipient de stockage peut coulisser d'une case directement dans un rayonnage et inversement.

3. Installation de transfert de produits selon la revendication 2, caractérisée en ce qu'un dispositif de chargement (6) est disposé sur les côtés du transstockeur pour magasin à hauts rayonnages (1) non tournés vers le magasin à rayonnages et est muni d'organes de prise (8) qui peuvent être guidés dans une case choisie du châssis de transport pour saisir le récipient de stockage (3) correspondant, les organes de prise (8) pouvant être sortis en direction du magasin à rayonnages.

4. Installation de transfert de produits selon la revendication 3, caractérisée en ce que le châssis de transport (4) possède, sur ses côtés non tournés vers le magasin à rayonnages, des montants ou respectivement des rebords d'introduction (27) pour les récipients de stockage, qui sont décalés vers l'intérieur par rapport aux montants verticaux (26) du châssis de transport de telle manière qu'il se produise un canal (25) s'étendant verticalement dans lequel les organes de prise (8) peuvent être positionnés à la hauteur du récipient respectif à saisir.

5. Installation de transfert de produits selon la revendication 4, caractérisée en ce que le dispositif de prise, lors de la saisie d'un récipient de stockage, peut être sorti télescopiquement du canal (25) en direction contre le magasin à rayonnages.

6. Installation de transfert de produits selon l'une des revendications 3 à 5, caractérisée en ce que les organes de prise possèdent chacun un preneur (28) pour la saisie des récipients de stockage dans leurs zones d'angle, les preneurs saisissant chaque récipient de stockage dans les zones d'angle avant par rapport au magasin à rayonnages et les preneurs étant disposés coulissant essentiellement sur la largeur du châssis de transport.

7. Installation de transfert de produits selon l'une des revendications précédentes, caractérisée en ce que le nombre d'emplacements dans le châssis de transport (4) dépasse d'au moins une unité le nombre des récipients (3) devant y être transportés.

8. Installation de transfert de produits selon l'une des revendications précédentes, caractérisée en ce que le châssis de transport peut être enlevé du transstockeur pour magasin à hauts rayonnages ou respectivement être mis dedans au moyen d'un transporteur à chaîne (11).

9. Installation de transfert de produits selon l'une des revendications 1 à 7, caractérisée en ce que le transstockeur pour magasin à hauts rayonnages possède une structure à fourche télescopique pouvant être déployée en direction du rayonnage de stockage, au moyen de laquelle le châssis de transport peut être dégagé hors du transstockeur pour magasin à hauts rayonnages ou respectivement être reçu dans celui-ci.

10. Installation de transfert de produits selon la revendication 9, pour magasin à rayonnages avec une zone de stockage pour la réception de châssis de transport, caractérisée en ce qu'un châssis de transport peut être transporté à chaque fois, au moyen de la structure à fourche télescopique, entre ladite zone de stockage et le transstockeur pour magasin à hauts rayonnages.

11. Installation de transfert de produits selon l'une des revendications précédentes, caractérisée en ce qu'une structure pour l'enlèvement de châssis de transport hors du transstockeur pour magasin à hauts rayonnages, pour le transport des châssis de transport enlevés à une station de prélèvement et pour la remise des châssis de transport dans le transstockeur pour magasin à hauts rayonnages est prévue dans la région du lieu de prélèvement de produits, un autre châssis de transport avec des récipients de stockage pouvant être chargé au moyen du transstockeur pour magasin à hauts rayonnages pendant le processus de prélèvement de produits.

12. Installation de transfert de produits selon la revendication 9, caractérisée en ce qu'un récipient de stockage après l'autre peut être enlevé respectivement hors du châssis de transport pour le prélèvement de produits à la station de prélèvement.

13. Procédé pour l'exploitation de l'installation selon l'une des revendications précédentes, caractérisé en ce qu'on garde ouverte respectivement au moins une place libre pour un récipient de stockage dans le châssis de transport, un récipient de stockage nouveau devant être reçu étant introduit hors du magasin à rayonnages respectivement à cette place, après quoi on introduit à la place devenue libre dans le magasin à rayonnages un récipient de stockage à délivrer, et on répète ce processus jusqu'à ce que le nouveau chargement du châssis de transport soit achevé.

Fig.1

Fig.2

Fig.3

Fig. 4a

Fig. 4b

Fig.5

Fig.6

Fig.7

Fig.8

Fig. 9